# EUROPÄISCHE PATENTSCHRIFT

(11) **EP 2 304 199 B1**
(45) Veröffentlichungstag und Bekanntmachung des Hinweises auf die Patenterteilung: **08.07.2015**
(21) Anmeldenummer: 09780728.3
(22) Anmeldetag: 16.07.2009
(51) Int. Cl.: F01M 11/06

(54) **GETRIEBEÖLRAUM**
GEAR OIL CHAMBER
COMPARTIMENT À HUILE POUR ENGRENAGE

(30) Priorität: 24.07.2008 DE 102008040691
(43) Veröffentlichungstag der Anmeldung: 06.04.2011
(73) Patentinhaber: ZF Friedrichshafen AG, 88038 Friedrichshafen (DE)
(72) Erfinder: EBENHOCH, Michael, 88069 Tettnang (DE); MICHEL, Christian, 88213 Ravensburg (DE)
(74) Vertreter: Paul, Andreas
(86) Internationale Anmeldenummer: PCT/EP2009/059175
(87) Internationale Veröffentlichungsnummer: WO 2010/010042

(56) Entgegenhaltungen:
- EP-A- 1 284 342
- DE-A1- 2 115 585
- DE-A1-102004 043 936
- DE-A1-102004 045 441
- US-A- 2 938 601

## Beschreibung

Die vorliegende Erfindung bezieht sich auf einen Getriebeölraum gemäß dem Oberbegriff des Patentanspruchs 1.

In Fahrzeuggetrieben stellt sich aufgrund der Fahrzeugdynamik, insbesondere aufgrund von Geschwindigkeitsänderungen ein dynamischer Ölstand im Getriebeölraum ein. In extremen Fahrsituationen, wie dies beispielsweise bei einem ABS-Bremsvorgang, beim Anfahren mit maximaler Beschleunigung oder bei schneller Kurvenfahrt der Fall ist, kann der Ölstand im Getriebeölraum derart variieren, dass es in nachteiliger Weise zu einer ungewünschten Luftansaugung kommt.

Aus der DE 7304197 U ist ein Ölwanneneinsatz zum Absperren von Durchflussöffnungen durch den Rückfluss eines Ölstromes bekannt, welcher eine mehrere Öffnungen aufweisende Platte umfasst, in der die Öffnungen verschließende Rückschlagklappen vorgesehen sind. Dadurch wird das unterhalb des Einsatzes befindliche Öl zurückgehalten und ein Ansaugen von Luft mittels der im Getriebeölraum angeordneten Ölpumpe vermieden.

Bei dieser Konstruktion können Situationen auftreten, bei denen sich das Öl durch extreme Beschleunigungen axial betrachtet an einer Seite des Getriebeölraumes sammelt, was wiederum zu einer Luftansaugung führen kann.

Aus der JP 20055248991 A ist ein Getriebeölraum bekannt, bei dem ein Prallblech vorgesehen ist, welches einen Hauptgetriebeölraum und einen benachbarten Getriebeölraum definiert, wobei der Getriebeölraum ein rotierendes Baiteil aufweist, das im benachbarten Getriebeölraum angeordnet ist. Hierbei ist das Prallblech derart ausgeführt, dass es ein Fließen des Öls vom benachbarten Getriebeölraum in den Hauptgetriebeölraum aufgrund einer durch das rotierende Bauteil erzeugten Pumpenwirkung ermöglicht.

Die aus der JP 20055248991 A bekannte Konstruktion erfordert in nachteiliger Weise einen erhöhten Herstellungs- und Montageaufwand.

Aus der DE 1927174 A ist eine Ölstandsicherung für eine Ölwanne bekannt, mit quer zur Fahrtrichtung angeordneten Schwallblechen, bei der ein an Boden- und Seitenwänden bis auf eine als Bypass wirkende Restöffnung am Bodenanschluss dicht anschließendes und in seiner Höhe den Ölspiegel bei waagerechter Motorlage wesentlich überragendes Schwallblech mit einer oder mehreren Öffnungen versehen ist. Hierbei sind die Öffnungen durch eine bewegliche auf der dem Ölansaugkorb zugewandten Seite des Schwallblechs angeordnete Klappe mit oben liegender waagerechter Schwenkachse verschließbar. Bei dieser Konstruktion kann Öl durch die Restöffnung in nachteiliger Weise und insbesondere bei lang anhaltenden Situationen hoher Verzögerung oder Beschleunigung des Fahrzeugs fließen, was ebenfalls zu einer Luftansaugung führen kann.

Schließlich zeigt die DE 10 2004 045 441 A1 einen Ölraum eines Fahrzeugs mit mehreren nebeneinander angeordneten Kammern welche bei Neigung des Fahrzeugs oder Kurvenfahrt mittels einseitig öffnenden Klappen zwischen den Kammern ein Leerlaufen einer mittleren Kammer verhindern.

Der vorliegenden Erfindung liegt die Aufgabe zugrunde, einen Getriebeölraum anzugeben, welcher derart ausgeführt ist, dass der für die Ölpumpe relevante Ölstand im Getriebeölraum auch bei extremen und lang anhaltenden Fahrsituationen, wie bei einem ABS-Bremsvorgang, ausreichend ist, so dass eine Luftansaugung vermieden werden kann.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Getriebeölraum vorgeschlagen, welcher einen Hauptölraum, in dem die Ansaugleitung der Ölpumpe angeordnet ist und zumindest einen Nebenölraum umfasst, wobei der zumindest eine Nebenölraum mit dem des Fahrzeugs verschlossen wird, um ein Fließen des Öls vom Hauptölraum in den Nebenölraum zu verhindern und wobei die Nebenölräume derart angeordnet, dass sie Leckageöl von Getriebebauteilen, beispielsweise der Anfahrkupplung, aufnehmen. In Situationen ohne eine hohe Beschleunigung, extreme Kurvenfahrt und/oder Verzögerung des Fahrzeugs sind die Öffnungen geöffnet, um einen Ölaustausch und ein Zurückfließen von Leckageöl vom zumindest einen Nebenölraum in den Hauptölraum zu gewährleisten.

Vorzugsweise wird die zumindest eine Öffnung derart verschlossen, dass das Öl vom Nebenölraum in den Hauptölraum fließen kann aber nicht umgekehrt.

Gemäß der Erfindung wird die zumindest eine Öffnung durch Massenkräfte, Federkraft und/oder durch hydrostatische und hydrodynamische Staudrücke des Öls geöffnet und/oder verschlossen.

Um bei einer starken Verzögerung des Fahrzeugs eine Luftansaugung zu vermeiden, ist ein Nebenölraum in Vorwärtsfahrtrichtung des Fahrzeugs betrachtet nach dem Hauptölraum angeordnet, wobei gemäß einer besonders vorteilhaften Ausführungsform der Erfindung der Nebenölraum in der Kupplungsglocke vorgesehen ist. Bei einer starken Verzögerung des Fahrzeugs wird erfindungsgemäß aufgrund der Trägheit und der Massenkräfte des Öls die zumindest eine Öffnung verschlossen, so dass der für die Ölpumpe relevante Ölstand im Getriebeölraum ausreichend ist.

Zusätzlich oder alternativ dazu kann ein weiterer Nebenölraum vorgesehen sein, der in Vorwärtsfahrtrichtung des Fahrzeugs betrachtet vor dem Hauptölraum angeordnet ist, wodurch bei einer hohen Beschleunigung des Fahrzeugs, beispielsweise beim Anfahren, eine Luftansaugung vermieden werden kann.

Gemäß der Erfindung können auch zwei weitere Nebenölräume vorgesehen sein, die derart angeordnet sind, dass bei extremer Kurvenfahrt die zumindest eine Öffnung zwischen einem dieser Nebenräume und dem Hauptölraum verschlossen wird, wodurch verhindert wird, dass das Öl vom Hauptölraum aufgrund der Trägheit in den Nebenraum gelangt. Vorzugsweise sind diese Nebenräume in Fahrzeuglängsrichtung betrachtet in Höhe des Hauptölraums neben dem Hauptölraum an jeweils gegenüberliegenden Seiten des Hauptölraums angeordnet und können das Leckageöl von Getriebebauteilen aufnehmen.

Vorzugsweise ist die zumindest eine Öffnung des zumindest einen Nebenölraumes an dem der Bodenwand des Getriebeölraumes zugewandten Ende der Gehäusewand zwischen dem Hauptölraum und dem Nebenölraum vorgesehen, wodurch ein Ölablassen mittels lediglich einer Ölablassöffnung im Getriebeölraum auf einfache Weise erzielbar ist.

Durch die erfindungsgemäße Konzeption der wird ein Getriebeölraum zur Verfügung gestellt, bei dem auf einfache Weise und ohne eine aufwendige Steuerung stets ausreichend Öl für die Pumpe zur Verfügung steht.

Gemäß einer Ausführungsform der Erfindung sind die Mittel zum Verschließen der zumindest einen Öffnung zwischen einem Nebenölraum und dem Hauptölraum als Klappenventile ausgeführt. Hierbei umfasst ein Klappenventil eine Klappe, und ist nach dem Scharnier-Prinzip aufgebaut ist, wobei die Klappe in Richtung des Hauptölraumes geöffnet werden kann. Vorzugsweise weist das Scharnier zwei Biege-/Stanzteile und einen als Drehachse für die Biege-/Stanzteile dienenden Zylinderstift. Das Scharnier wird, beispielsweise mittels Schrauben, an eine Öffnung geschraubt, welche durch die Klappe komplett verdeckt werden kann.

Im Rahmen einer weiteren Ausführungsform der Erfindung wird vorgeschlagen, die Mittel zum Verschließen der zumindest einen Öffnung zwischen einem Nebenölraum und dem Hauptölraum als ein gegen die Kraft einer Feder schließendes Tellerventil auszubilden.

Die Erfindung wird im Folgenden anhand der beigefügten Figuren für den Fall einer hohen Verzögerung beispielhaft näher erläutert. In Fällen extremer Kurvenfahrt oder hoher Beschleunigung ist die Funktionsweise analog. In den Figuren stellen dar:
- Figur 1:: Eine schematische Ansicht einer Ausführungsform eines erfindungsgemäßen Getriebeölraums, wobei die Öffnung zwischen dem Hauptölraum und einem Nebenölraum im geschlossenen Zustand dargestellt ist;
- Figur 2:: Eine schematische Ansicht der Ausführungsform aus Figur 1, wobei die Öffnung zwischen dem Hauptölraum und einem Nebenölraum im offenen Zustand dargestellt ist;
- Figur 3:: Eine schematische Ansicht einer weiteren Ausführungsform eines erfindungsgemäßen Getriebeölraums, wobei die Öffnung zwischen dem Hauptölraum und einem Nebenölraum im geschlossenen Zustand dargestellt ist; und

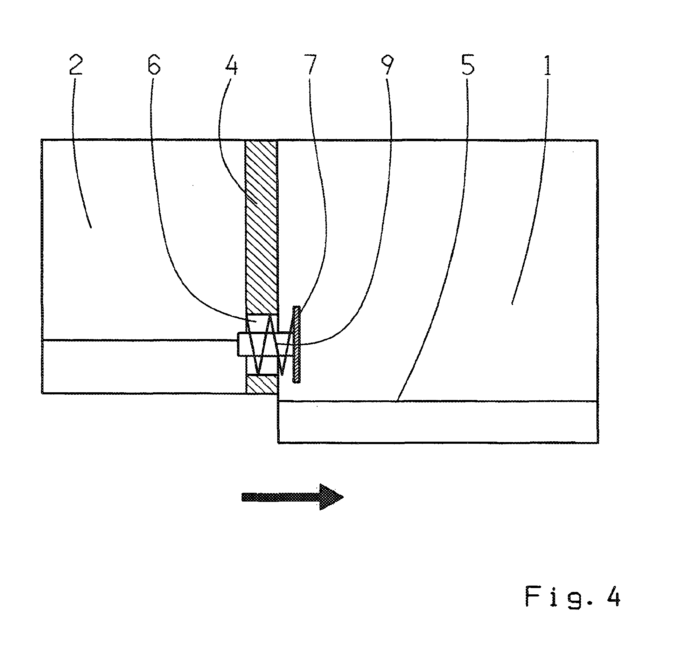

- Figur 4:: Eine schematische Ansicht der Ausführungsform aus Figur 3, wobei die Öffnung zwischen dem Hauptölraum und einem Nebenölraum im offenen Zustand dargestellt ist.

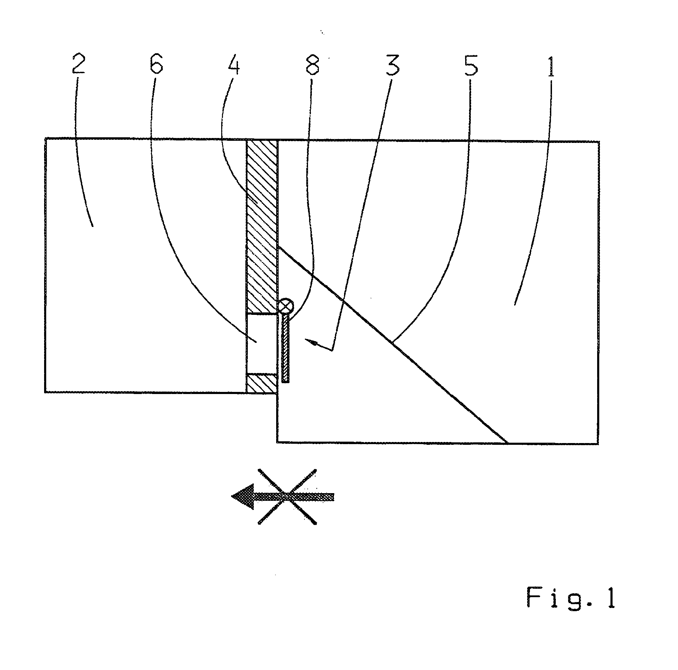

In Figur 1 ist ein erfindungsgemäßer Getriebeölraum dargestellt, welcher einen Hauptölraum 1, in dem die Ansaugleitung der Ölpumpe (nicht dargestellt) angeordnet ist und einen in Vorwärtsfahrtrichtung des Fahrzeugs betrachtet nach dem Hauptölraum angeordneten Nebenölraum 2 umfasst. Gemäß der Erfindung ist der Nebenölraum 2 mit dem Getriebeölraum über eine Öffnung 6 fluidtechnisch verbunden.

Der Öffnung 3 ist bei dem in Figur 1 gezeigten Beispiel ein Klappenventil 3 zugeordnet, durch das die Öffnung 6 in Situationen hoher Verzögerung des Fahrzeugs verschlossen wird, um ein Fließen des Öls vom Hauptölraum 1 in den Nebenölraum 2 zu verhindern.

Im Falle einer hohen Verzögerung, beispielsweise eines ABS-Bremsvorgangs, wird die Klappe 8 des Klappenventils 3 durch die Massenträgheit der Klappe 8 und durch den im Hauptölraum anfallenden dynamischen Ölstaudruck gegen die Gehäusewand 4 zwischen dem Hauptölraum 1 und dem Nebenölraum 2 gedrückt, wodurch die Öffnung 6 verschlossen wird, wie durch den Pfeil im unteren Teil der Figur verdeutlicht. Das Öl aus dem Hauptölraum kann somit nicht in den durch die Klappe 8 abgedichteten Nebenölraum 2 eindringen und es bleibt ausreichend Öl im Getriebesumpf übrig. Der Ölstand ist in Figur 1 sowie in den weiteren Figuren mit 5 bezeichnet.

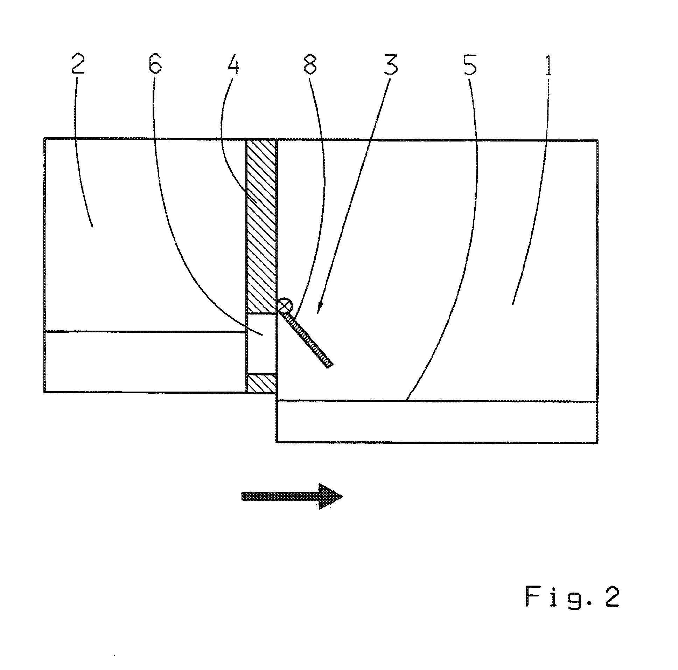

Außerhalb eines Bremsbetriebs mit hoher Verzögerung wird das im Nebenölraum 2 anfallende Leckageöl (beispielsweise kann es sich hierbei um das Leckageöl aus der Kupplungsglocke handeln) durch den hydrostatischen Staudruck die Klappe 8 in Richtung des Hauptölraumes 1 aufdrücken und zurück in den Hauptölraum 1 fließen, wie anhand Figur 2 veranschaulicht.

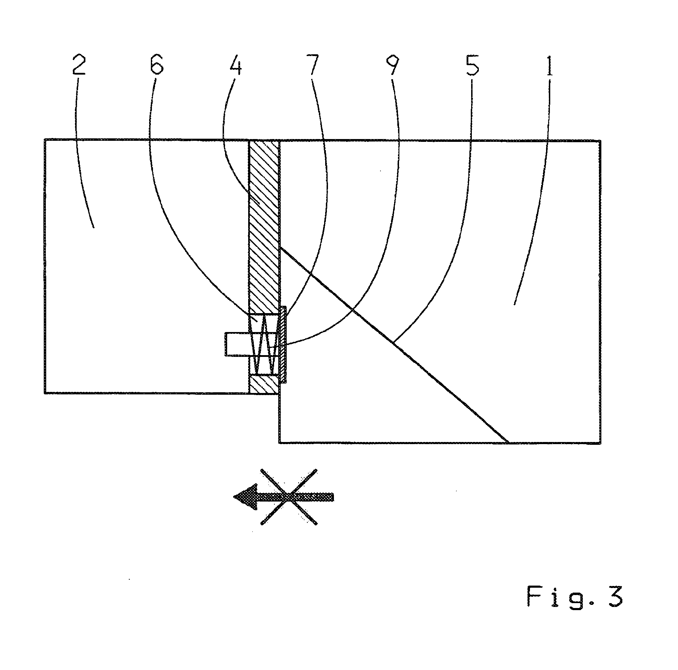

Das in Figur 3 gezeigte Ausführungsbeispiel unterscheidet sich vom Ausführungsbeispiel gemäß Figur 1 dadurch, dass als Mittel zum Verschließen der Öffnung 3 ein Tellerventil 7 dient, welches im Fall einer hohen Verzögerung mit Öl aus dem Hauptölraum 1 beaufschlagt wird und dadurch gegen die Kraft einer Feder 9 die Öffnung 6 verschließt.

Außerhalb eines Bremsbetriebs mit hoher Verzögerung wird das Tellerventil 7 durch den hydrostatischen Staudruck des Leckageöls und die Federkraft der Feder 9 wieder geöffnet.

### Bezugszeichen

- 1: Hauptölraum
- 2: Nebenölraum
- 3: Klappenventil
- 4: Gehäusewand
- 5: Ölstand
- 6: Öffnung
- 7: Tellerventil
- 8: Klappe
- 9: Feder

## Patentansprüche

1. Ölraum eines Fahrzeuges, umfassend einen Hauptölraum (1), in dem eine Ansaugleitung einer Ölpumpe angeordnet ist und einen Nebenölraum (2), wobei der Nebenölraum (2) mit dem Hauptölraum (1) über zumindest eine Öffnung (6) fluidtechnisch verbunden ist, wobei Mittel (3, 7) vorgesehen sind, durch die die zumindest eine Öffnung (6) in Situationen hoher Beschleunigung, extremer Kurvenfahrt und/oder hoher Verzögerung des Fahrzeugs verschlossen wird, um ein Fließen des Öls vom Hauptölraum (1) in den Nebenölraum (2) zu verhindern, so dass der für die Ölpumpe relevante Ölstand im Hauptölraum (1) ausreichend ist, wodurch eine Luftansaugung vermieden werden kann, wobei in Situationen ohne eine hohe Beschleunigung, extreme Kurvenfahrt und/oder hohe Verzögerung des Fahrzeugs die zumindest eine Öffnung (6) des zumindest einen Nebenölraums (2) geöffnet ist, **dadurch gekennzeichnet, dass** der Ölraum ein Getriebeölraum ist, wobei der Nebenölraum (2) in einer Kupplungsglocke vorgesehen ist, Leckageöl von Getriebebauteilen aufnimmt und in Vorwärtsfahrtrichtung des Fahrzeugs betrachtet nach dem Hauptölraum (1) angeordnet ist, wobei das Leckageöl aus der Kupplungsglocke außerhalb eines Bremsbetriebs mit hoher Verzögerung in den Hauptölraum fließen kann; wodurch bei einer hohen Verzögerung des Fahrzeugs eine Luftansaugung vermieden wird.

2. Ölraum nach Anspruch 1, **dadurch gekennzeichnet, dass** die zumindest eine Öffnung (6) des zumindest einen Nebenölraums (2) derart verschließbar ist, dass das Öl vom Nebenölraum (1) in den Hauptölraum (2) fließen kann aber nicht umgekehrt.

3. Ölraum nach Anspruch 1 oder 2, **dadurch gekennzeichnet, dass** die zumindest eine Öffnung (6) des zumindest einen Nebenölraums (2) durch Massenkräfte, Federkraft und/oder durch hydrostatische und hydrodynamische Staudrücke des Öls geöffnet und/oder verschlossen wird.

4. Ölraum nach einem der vorangehenden Ansprüche, **dadurch gekennzeichnet, dass** die Mittel zum Verschließen der zumindest einen Öffnung (6) zwischen einem Nebenölraum (2) und dem Hauptölraum (1) als nach dem Scharnierprinzip ausgebildete Klappenventile (3) ausgeführt sind, wobei die Klappe (8) des Klappenventils (3) in Richtung des Hauptölraums (1) geöffnet werden kann und in Situationen hoher Verzögerung des Fahrzeugs durch die Massenträgheit der Klappe (8) und durch den im Hauptölraum anfallenden dynamischen Ölstaudruck gegen eine Gehäusewand (4) zwischen dem Hauptölraum (1) und dem Nebenölraum (2) gedrückt wird, wodurch die Öffnung (6) verschlossen wird, wobei außerhalb von Situationen hoher Verzögerung des Fahrzeugs das im Nebenölraum (2) anfallende Leckageöl durch den hydrostatischen Staudruck die Klappe (8) in Richtung des Hauptölraumes (1) aufdrückt.

5. Ölraum nach Anspruch 4, **dadurch gekennzeichnet, dass** die zumindest eine Öffnung (6) des Nebenölraumes (2) an dem der Bodenwand des Getriebeölraumes zugewandten Ende der Gehäusewand (4) zwischen dem Hauptölraum (1) und dem Nebenölraum (2) vorgesehen ist.

## Claims

1. Oil chamber of a vehicle, comprising a main oil chamber (1), in which an intake line of an oil pump is arranged, and an auxiliary oil chamber (2), the auxiliary oil chamber (2) being connected fluidically to the main oil chamber (1) via at least one opening (6), means (3, 7) being provided, by way of which the at least one opening (6) is closed in situations of high acceleration, extreme cornering and/or high retardation of the vehicle, in order to prevent a flow of the oil from the main oil chamber (1) into the auxiliary oil chamber (2), with the result that the relevant oil level for the oil pump in the main oil chamber (1) is sufficient, as a result of which an intake of air can be avoided, the at least one opening (6) of the at least one auxiliary oil chamber (2) being open in situations without high acceleration, extreme cornering and/or high retardation of the vehicle, **characterized in that** the oil chamber is a transmission oil chamber, the auxiliary oil chamber (2) being provided in a clutch housing, receiving leakage oil from transmission components and being arranged behind the main oil chamber (1) as viewed in the forward driving direction of the vehicle, it being possible for the leakage oil from the clutch housing to flow with high retardation into the main oil chamber outside of braking operation; as a result of which an intake of air is avoided during high retardation of the vehicle.

2. Oil chamber according to Claim 1, **characterized in that** the at least one opening (6) of the at least one auxiliary oil chamber (2) can be closed in such a way that the oil can flow from the auxiliary oil chamber (1) into the main oil chamber (2) but not vice versa.

3. Oil chamber according to Claim 1 or 2, **characterized in that** the at least one opening (6) of the at least one auxiliary oil chamber (2) is opened and/or closed by way of mass forces, spring force and/or by way of hydrostatic and hydrodynamic back pressures of the oil.

4. Oil chamber according to one of the preceding claims, **characterized in that** the means for closing the at least one opening (6) between an auxiliary oil chamber (2) and the main oil chamber (1) are embodied as flap valves (3) which are configured according to the hinge principle, it being possible for the flap (8) of the flap valve (3) to be opened in the direction of the main oil chamber (1), and the said flap (8) being pressed against a housing wall (4) between the main oil chamber (1) and the auxiliary oil chamber (2) in situations of high retardation of the vehicle by way of the mass moment of inertia of the flap (8) and by way of the dynamic oil back pressure which accumulates in the main oil chamber, as a result of which the opening (6) is closed, the leakage oil which accumulates in the auxiliary oil chamber (2) pressing the flap (8) in the direction of the main oil chamber (1) as a result of the hydrostatic back pressure outside situations of high retardation of the vehicle.

5. Oil chamber according to Claim 4, **characterized in that** the at least one opening (6) of the auxiliary oil chamber (2) is provided at that end of the housing wall (4) between the main oil chamber (1) and the auxiliary oil chamber (2) which faces the bottom wall of the transmission oil chamber.

## Revendications

1. Compartiment à huile d'un véhicule, comprenant un compartiment à huile principal (1) dans lequel est disposée une conduite d'aspiration d'une pompe à huile et un compartiment à huile secondaire (2), le compartiment à huile secondaire (2) étant connecté par une technique fluidique au compartiment à huile principal (1) par le biais d'au moins une ouverture (6), des moyens (3, 7) étant prévus, par le biais desquels l'au moins une ouverture (6) est fermée dans des situations de forte accélération, de conduite en courbe extrême et/ou de fort ralentissement du véhicule, afin d'éviter que l'huile ne s'écoule hors du compartiment à huile principal (1) dans le compartiment à huile secondaire (2), de sorte que le niveau d'huile pertinent pour la pompe à huile dans le compartiment à huile principal (1) soit suffisant, de sorte qu'une aspiration d'air puisse être évitée, l'au moins une ouverture (6) de l'au moins un compartiment à huile secondaire (2) étant ouverte dans des situations sans forte accélération, conduite en courbe extrême et/ou fort ralentissement du véhicule, **caractérisé en ce que** le compartiment à huile est un compartiment à huile de transmission, le compartiment à huile secondaire (2) étant prévu dans une cloche d'embrayage, recevant de l'huile de fuite des composants de la transmission et étant disposé, vu dans la direction de conduite avant du véhicule, derrière le compartiment à huile principal (1), l'huile de fuite pouvant s'écouler hors de la cloche d'embrayage dans le compartiment à huile principal en dehors d'un fonctionnement de freinage avec un fort ralentissement, de sorte que, dans le cas d'un fort ralentissement du véhicule, une aspiration d'air soit évitée.

2. Compartiment à huile selon la revendication 1, **caractérisé en ce que** l'au moins une ouverture (6) de l'au moins un compartiment à huile secondaire (2) peut être fermée de telle sorte que l'huile puisse s'écouler depuis le compartiment à huile secondaire (1) dans le compartiment à huile principal (2) mais pas l'inverse.

3. Compartiment à huile selon la revendication 1 ou 2, **caractérisé en ce que** l'au moins une ouverture (6) de l'au moins un compartiment à huile secondaire (2) est ouverte et/ou fermée par des forces de masse, une force de ressort et/ou par des pressions de retenue hydrostatiques et hydrodynamiques de l'huile.

4. Compartiment à huile selon l'une quelconque des revendications précédentes, **caractérisé en ce que** les moyens pour fermer l'au moins une ouverture (6) entre le compartiment à huile secondaire (2) et le compartiment à huile principal (1) sont réalisés sous forme de soupapes à clapet (3) réalisées selon le principe de charnière, le clapet (8) de la soupape à clapet (3) pouvant être ouvert dans la direction du compartiment à huile principal (1), et, dans des situations de fort ralentissement du véhicule, étant pressé par l'inertie de masse du clapet (8) et par la pression de retenue d'huile dynamique se présentant dans le compartiment à huile principal contre une paroi de boîtier (4) entre le compartiment à huile principal (1) et le compartiment à huile secondaire (2), de sorte que l'ouverture (6) soit fermée, l'huile de fuite se présentant dans le compartiment à huile secondaire (2), en dehors de situations de fort ralentissement du véhicule, pressant le clapet (8) sous l'effet de la pression de retenue hydrostatique dans la direction du compartiment à huile principal (1).

5. Compartiment à huile selon la revendication 4, **caractérisé en ce que** l'au moins une ouverture (6) du compartiment à huile secondaire (2) est prévue au niveau de l'extrémité de la paroi de boîtier (4) tournée vers la paroi de fond du compartiment à huile de transmission entre le compartiment à huile principal (1) et le compartiment à huile secondaire (2).
